# EUROPÄISCHE PATENTSCHRIFT

(11) **EP 4 318 142 B1**
(45) Veröffentlichungstag und Bekanntmachung des Hinweises auf die Patenterteilung: **12.03.2025**
(21) Anmeldenummer: 23187398.5
(22) Anmeldetag: 25.07.2023
(51) Int. Cl.: G05B 19/042

(54) **PROZESSÜBERWACHUNGSSYSTEM**
PROCESS MONITORING SYSTEM
SYSTÈME DE SURVEILLANCE DE PROCESSUS

(30) Priorität: 04.08.2022 DE 102022119620
(43) Veröffentlichungstag der Anmeldung: 07.02.2024
(73) Patentinhaber: SICK AG, 79183 Waldkirch (DE)
(72) Erfinder: SCHWEIGER, Stefan, 79331 Teningen (DE)
(74) Vertreter: Manitz Finsterwald Patent- und Rechtsanwaltspartnerschaft mbB

(56) Entgegenhaltungen:
- DE-U1- 202009 012 733
- US-A1- 2011 231 535
- US-A1- 2019 271 578

## Beschreibung

Die vorliegende Erfindung betrifft ein Prozessüberwachungssystem für die Überwachung eines industriellen Prozesses mit einem Hauptsensor und zumindest einem vom Hauptsensor separaten Zusatzsensor.

Aufgrund steigender Energiekosten, beispielsweise für Druckluft, Strom, Industriegase und/oder Wasser werden mehr und mehr industrielle Prozesse mittels Sensoren überwacht. Mittels der Sensoren kann dann beispielsweise der Verbrauch von Druckluft überwacht werden, wobei insbesondere auch Lecks in den Druckluftleitungen ermittelbar sind.

Aufgrund der steigenden Anzahl von Sensoren in industriellen Prozessen besteht die Herausforderung, eine einfache Integration von solchen Sensoren bzw. Verbrauchszählern in bestehende Datenverarbeitungssysteme zu ermöglichen.

Üblicherweise werden dazu speicherprogrammierbare Steuerungen (SPS) verwendet, die Messdaten der einzelnen Sensoren empfangen, bündeln und zur Datenauswertung z.B. an Computersysteme weiterleiten. Aufgrund dieser Infrastruktur müssen viele verschiedene Komponenten zusätzlich installiert und gewartet werden, beispielsweise die speicherprogrammierbare Steuerung selbst oder die Energieversorgung für die speicherprogrammierbare Steuerung. Hinzu kommt der Entwicklungsaufwand für die entsprechende Programmierung der speicherprogrammierbaren Steuerung. Diese zusätzlichen Komponenten und der zusätzliche Entwicklungsaufwand verursacht Kosten, benötigt Zeit und Platz und ist damit nachteilig.

US 2019/0271578 A1 beschreibt ein Sensorgerät für die Überwachung von Behältern.

US 2011/023153 A1 beschreibt ein kabelloses Sensornetzwerk, in dem ein örtliches kabelloses Netzwerk eine Vielzahl von Sensorknoten bedient.

DE 20 2009 012 733 U1 beschreibt einen Füllstandssensor mit Anschluss zum Datenaustausch und zur Energieversorgung.

Es ist daher die der Erfindung zugrundeliegende Aufgabe, ein Prozessüberwachungssystem anzugeben, welches eine einfache und kostengünstige Anbindung von Sensoren zur Überwachung eines industriellen Prozesses ermöglicht.

Diese Aufgabe wird durch ein Prozessüberwachungssystem gemäß Anspruch 1 gelöst.

Das erfindungsgemäße Prozessüberwachungssystem dient der Überwachung eines industriellen Prozesses. Das Prozessüberwachungssystem umfasst einen Hauptsensor und zumindest einen von dem Hauptsensor separaten Zusatzsensor. Weiterhin umfasst das Prozessüberwachungssystem eine von den Sensoren separate Datenauswertungseinheit. Der Hauptsensor und der Zusatzsensor sind ausgebildet, Messdaten zu erfassen, die bevorzugt den Zustand des industriellen Prozesses widerspiegeln. Der Hauptsensor ist mit dem Zusatzsensor über eine erste Datenverbindung gekoppelt und ausgebildet, über die erste Datenverbindung die Messdaten des Zusatzsensors zu empfangen. Der Hauptsensor ist weiterhin mit der Datenauswertungseinheit über eine zweite Datenverbindung gekoppelt und ausgebildet, seine eigenen Messdaten und die Messdaten des Zusatzsensors über die zweite Datenverbindung an die Datenauswertungseinheit zu übertragen.

Die Erfindung setzt auf der Erkenntnis auf, dass der ohnehin vorhandene Hauptsensor dazu genutzt werden kann, nicht nur seine eigenen Messdaten an die Datenauswertungseinheit zu übertragen, sondern zusätzlich dazu herangezogen werden kann, die Messdaten des Zusatzsensors zu empfangen und an die Datenauswertungseinheit (z.B. eine Cloud) weiterzuleiten. Auf diese Weise kann der Aufwand für eine SPS eingespart werden, deren einziger Zweck es z.B. ist, die Messdaten des Zusatzsensors zu empfangen und an die Datenauswertungseinheit weiterzugeben. Es versteht sich, dass dafür in dem Hauptsensor ausreichend Ressourcen zum Empfang und zur Weiterleitung der Messdaten vorhanden sein müssen.

Im Folgenden wird meist nur von einem Zusatzsensor gesprochen. Es ist aber ebenso möglich, dass der Hauptsensor über Datenverbindungen mit mehreren Zusatzsensoren gekoppelt ist und die Messdaten der mehreren Zusatzsensoren empfängt und an die Datenauswertungseinheit überträgt. Die hierin enthaltenen Erläuterungen zu dem einen Zusatzsensor gelten entsprechend jeweils für eine Vielzahl von Zusatzsensoren.

Anders ausgedrückt ist also der Hauptsensor zum einen über die erste Datenverbindung mit dem Zusatzsensor verbunden und erhält vom Zusatzsensor dessen Messdaten. Im Hauptsensor können die Messdaten des Zusatzsensors dann so umgesetzt werden, dass sie an die Datenauswertungseinheit übertragen werden können. Zu diesem Zweck ist der Hauptsensor über die zweite Datenverbindung mit der Datenauswertungseinheit verbunden und kann an die Datenauswertungseinheit sowohl seine eigenen Messdaten als auch die Messdaten des Zusatzsensors übertragen.

Vorteilhafte Weiterbildungen der Erfindung sind der Beschreibung, den Figuren sowie den Unteransprüchen zu entnehmen.

Gemäß einer ersten Ausführungsform umfassen die erste und die zweite Datenverbindung an dem Hauptsensor unterschiedliche Hardware-Schnittstellen. Der Hauptsensor kann also eine erste Hardware-Schnittstelle für die erste Datenverbindung und eine zweite, von der ersten Hardware-Schnittstelle unterschiedliche, Hardware-Schnittstelle für die zweite Datenverbindung umfassen. Die Hardware-Schnittstellen sind insbesondere nicht miteinander kompatibel. Der Hauptsensor kann also beispielsweise die Messdaten des Zusatzsensors in einem bestimmten Datenformat erhalten, wobei der Hauptsensor das Datenformat derart verändern kann, dass eine Übertragung an die Datenauswertungseinheit möglich ist.

Erfindungsgemäß ist die erste Datenverbindung ausgebildet, Messdaten mittels Pulsabfolgen zu übertragen. Dabei umfasst die erste Datenverbindung (und/oder die zugehörige Hardware-Schnittstelle des Hauptsensors) insbesondere eine S0-Puls Schnittstelle. Eine Übertragung mittels Pulsabfolge stellt keine hohen Anforderungen an den Zusatzsensor, weshalb eine derartige Datenübertragung auch in kleine und günstige Sensoren integriert werden kann. Die Pulsabfolge kann insbesondere elektrisch, mittels elektrischer Leitungen, oder auch optisch, beispielsweise mittels eines Infrarotsignals, übertragen werden. Der Hauptsensor kann dementsprechend als Hardware-Schnittstelle für die erste Datenverbindung einen elektrischen Anschluss und/oder eine Infrarotschnittstelle aufweisen. Bei dem elektrischen Anschluss kann es sich z.B. um einen mehrpoligen Stecker mit Schraubgewinde handeln. Die Infrarotschnittstelle kann z.B. mittels einer Magnetfixierung direkt an dem Gehäuse des Hauptsensors angebracht sein. Weiterhin kann die Hardware-Schnittstelle für die erste (und/oder auch zweite Datenverbindung) eine Glasfaser mit entsprechendem Steckplatz im Gehäuse des Hauptsensors umfassen. Über die Glasfaser können die Messdaten z.B. über optisches Ethernet übertragen werden.

Insbesondere die SO-Puls Schnittstelle ist oft in einfachen Energie- und/oder Volumen- und/oder Wasserzählern integriert. Bei dieser Schnittstelle werden elektrische Pulse mit beispielsweise 30 V oder 27 V zur Datenübertragung verwendet.

Insbesondere kann eine direkte, insbesondere elektrische, Datenverbindung zwischen dem Zusatzsensor und dem Hauptsensor bestehen, beispielsweise die vorgenannte elektrische Leitung, so dass die Messdaten beim Hauptsensor pulscodiert eintreffen können.

Bei der Verwendung von Pulsabfolgen kann, insbesondere von einem Benutzer, z.B. die Anzahl der Pulse je Einheit, festgelegt werden. Beispielsweise können 800 Pulse jeweils einer Kilowattstunde (kWh) entsprechen. Alternativ können beispielsweise 400 Pulse jeweils einem Norm-Kubikmeter entsprechen. Zusätzlich kann der Benutzer, insbesondere in dem Hauptsensor, den Startwert und/oder die Einheit (Kilowattstunde, Kubikmeter, Grad Celsius und dergleichen) der jeweiligen Messdaten des an einer bestimmten Hardware-Schnittstelle angeschlossenen Zusatzsensors einstellen. Im Hauptsensor können die von dem Zusatzsensor empfangenen Messdaten intern als Prozessgröße (d.h. wie ein Messwert des Hauptsensors selbst) behandelt und insbesondere letztlich der Datenauswertungseinheit zur Verfügung gestellt werden.

Zusätzlich zu der SO-Puls Schnittstelle erfolgt auch eine Datenübertragung mittels M-Bus (auch Meter-Bus genannt) oder mittels Smart Message Language (SML). Andere Methoden der Datenübertragung sind ebenfalls möglich. Es versteht sich, dass diese alternativen oder zusätzlichen Datenübertragungsmethoden bei jeder hierin erfolgten Nennung der SO-Puls Schnittstelle als Alternative oder als Zusatz anzusehen sind.

Gemäß einer alternativen Ausführungsform, die nicht unter die Ansprüche fällt, umfasst die erste Datenverbindung ein Gateway, an welches der Zusatzsensor angeschlossen ist, wobei der Hauptsensor ausgebildet ist, die Messdaten des Zusatzsensors von dem Gateway zu empfangen und/oder abzurufen. Das Gateway kann mittels der ersten Datenverbindung mit dem Hauptsensor verbunden sein. An das Gateway kann wiederum eine Vielzahl von Zusatzsensoren angeschlossen sein, wobei der Hauptsensor die Messdaten eines Teils oder aller Zusatzsensoren von dem Gateway empfängt und/oder abruft. In diesem Fall besteht keine direkte Datenverbindung zwischen dem Zusatzsensor und dem Hauptsensor.

Gemäß einer weiteren Ausführungsform, die nicht unter die Ansprüche fällt, ist der Zusatzsensor ausgebildet, seine Messdaten mittels Pulsabfolgen, insbesondere mittels einer SO-Puls Schnittstelle an das Gateway zu übertragen, wobei das Gateway und der Hauptsensor mittels einer als Ethernet-Verbindung ausgestalteten ersten Datenverbindung miteinander verbunden sind. Für die Übermittlung der Messdaten mittels Pulsabfolge an das Gateway gelten die obigen Ausführungen zur Übermittlung der Messdaten mittels Pulsabfolge zwischen Zusatzsensor und Hauptsensor entsprechend.

Bei dem Gateway kann es sich insbesondere um ein S0-Gateway handeln, welches die mittels Pulsabfolgen empfangenen Messdaten auf eine Ethernet-Verbindung umsetzt, so dass die Messdaten mittels der Ethernet-Verbindung an den Hauptsensor übertragen werden können. Auf dem Hauptsensor kann dazu ein Client ausgeführt werden, der die Messdaten vom Gateway abholt bzw. abruft und an den Hauptsensor überträgt.

Gemäß einer weiteren Ausführungsform ist die zweite Datenverbindung eine Ethernet-Verbindung. Als Hardware-Schnittstelle kann der Hauptsensor hierfür eine Ethernet-Schnittstelle umfassen. Wird gemäß einer Ausführungsform, die nicht unter die Ansprüche fällt, mit dem Gateway auch über Ethernet kommuniziert, so muss der Hauptsensor nicht zwei verschiedene Hardware-Schnittstellen aufweisen, sondern kann insbesondere lediglich eine Ethernet-Schnittstelle umfassen, über die die erste Datenverbindung zu dem Gateway und die zweite Datenverbindung zu der Datenauswertungseinheit hergestellt wird.

Bei den hierin genannten Ethernet-Verbindungen kann es sich insbesondere um Ethernet-Verbindungen mit Leistungsübertragung (Power over Ethernet, PoE) handeln. Die Sensoren können somit über die Ethernet-Verbindungen mit elektrischer Energie versorgt werden.

Über die Ethernet-Verbindung kann der Hauptsensor seine eigenen und die Messdaten des Zusatzsensors/der Zusatzsensoren per Ethernet an die Datenauswertungseinheit übertragen, wobei beispielsweise ein Ethernet-basierter Feldbus, das HTTP- oder HTTPs-Protokoll, ein Webserver, das MQTT-Protokoll (Message Queuing Telemetry Transport) oder OPC UA (Open Platform Communications Unified Architecture) verwendet werden.

Durch den Umstand, dass der Hauptsensor sowohl seine eigenen Messdaten, als auch die Messdaten des Zusatzsensors der Datenauswertungseinheit zur Verfügung stellt, kann der Hauptsensor ausgebildet sein, die Messdaten des Zusatzsensors in sein eigenes Datenmodell zu integrieren und/oder einzubetten. Dies vereinfacht die Bereitstellung der Messdaten für die Datenauswertungseinheit. Bei der Implementierung des Prozessüberwachungssystems besteht zudem der Vorteil, dass für die Datenauswertungseinheit nur ein einzelner Datenendpunkt (nämlich der Hauptsensor) eingerichtet werden muss, von welchem sämtliche Messdaten abgerufen/empfangen werden können. Separate Kommunikationseinstellungen der Datenauswertungseinheit für jeden Zusatzsensor können daher eingespart werden.

Gemäß einer weiteren Ausführungsform weist der Hauptsensor eine Recheneinrichtung auf, welche ausgebildet ist, einen Webserver auszuführen, wobei die Recheneinrichtung zusätzlich ausgebildet ist, die Messdaten des Hauptsensors und des Zusatzsensors an die Datenauswertungseinheit zu übermitteln. Der Webserver kann die Darstellung der Messdaten des Hauptsensors und auch des Zusatzsensors ermöglichen. Die somit ohnehin in dem Hauptsensor vorgesehene Recheneinrichtung kann dann auch dazu verwendet werden, die Messdaten des Hauptsensors und des Zusatzsensors an die Datenauswertungseinheit zu übermitteln. Vor der Übermittlung können Berechnungen auf den Messdaten und/oder Anpassungen des Übertragungsformats von der Recheneinrichtung vorgenommen werden. Der Webserver kann beispielsweise über das HTTP- oder das HTTPs-Protokoll über die erste und/oder zweite Datenverbindung erreicht werden.

Es versteht sich, dass der Hauptsensor auch dann eine Recheneinrichtung umfassen kann, wenn der Hauptsensor keinen Webserver ausführen kann.

Gemäß einer weiteren Ausführungsform sind der Hauptsensor, der Zusatzsensor und die Datenauswertungseinheit räumlich voneinander getrennt angeordnet und sind insbesondere jeweils in separaten Gehäusen integriert. Der Hauptsensor, der Zusatzsensor und die Datenauswertungseinheit können somit eigenständige Geräte sein, wobei der Hauptsensor und/oder der Zusatzsensor beispielsweise als Feldgeräte ausgebildet sein können. Der Hauptsensor und der Zusatzsensor können insbesondere mehrere Meter voneinander entfernt angeordnet sein. Zwischen dem Hauptsensor und der Datenauswertungseinheit können noch deutlich größere Entfernungen liegen, beispielsweise mehrere 100 m oder mehrere Kilometer.

Gemäß einer weiteren Ausführungsform sind der Hauptsensor und der Zusatzsensor ausgebildet, voneinander unterschiedliche physikalische Größen als Messdaten zu erfassen. Die Sensoren erfassen also unterschiedliche Messparameter.

Gemäß einer Ausführungsform kann der Hauptsensor ein Durchflusssensor sein, welcher bevorzugt ein thermischer Durchflussmesser, insbesondere für Druckluft, ist. Der Hauptsensor kann dementsprechend nach dem kalorimetrischen Funktionsprinzip arbeiten. Der Hauptsensor kann eine Sensorsonde umfassen, welche erwärmt wird. Das an der Sensorsonde vorbeifließende Medium kühlt die Sensorsonde ab, wobei der Temperaturabfall proportional zur Fließgeschwindigkeit sein kann. Aus dem Temperaturabfall kann somit das durch den Hauptsensor fließende Volumen, beispielsweise von Druckluft, ermittelt werden.

Gemäß einer weiteren Ausführungsform ist der Zusatzsensor ein Stromzähler oder ein Wasserzähler. Der Zusatzsensor kann beispielsweise überwachen, wie viel elektrische Energie ein Verbraucher in dem industriellen Prozess benötigt hat oder welches Volumen von Wasser oder einer anderen Flüssigkeit in dem industriellen Prozess verbraucht wurde. Die Messdaten des Zusatzsensors, beispielsweise also die Menge der elektrischen Energie oder des verbrauchten Wassers, können dann in regelmäßigen Abständen (beispielsweise alle 5, 10, 30 oder 60 Sekunden) über die erste Datenverbindung an den Hauptsensor übermittelt werden.

Gemäß einer weiteren Ausführungsform ist die Datenauswertungseinheit durch einen Edge-Computer oder einen Cloud-Computer gebildet. Bei dem Edge-Computer kann es sich beispielsweise um einen Computer handeln, der in der Nähe der Sensoren, z.B. in derselben Fabrikhalle angeordnet ist. Der Cloud-Computer kann weit entfernt von dem industriellen Prozess, beispielsweise in einer Server-Farm, untergebracht sein. Die Verbindung zu dem Edge- oder dem Cloud-Computer kann jeweils über ein Ethernet-Netzwerk, welches die zweite Datenverbindung realisiert, ermöglicht werden. Die Datenauswertungseinheit kann die Messdaten der verschiedenen Sensoren empfangen, darauf Berechnungen durchführen, die Messdaten auswerten und/oder an ein Prozess- oder Management-System weitergeben.

Weiterer Gegenstand der Erfindung ist ein Sensor, hier entsprechend den vorherigen Ausführungen "Hauptsensor" genannt, für ein Prozessüberwachungssystem zur Überwachung eines industriellen Prozesses, wobei der Hauptsensor ausgebildet ist, Messdaten zu erfassen. Der Hauptsensor ist mit einem Zusatzsensor über eine erste Datenverbindung koppelbar und ist ausgebildet, über die erste Datenverbindung Messdaten des Zusatzsensors zu empfangen. Überdies ist der Hauptsensor mit einer Datenauswertungseinheit über eine zweite Datenverbindung koppelbar und ist ausgebildet, seine eigenen Messdaten und die Messdaten des Zusatzsensors über die zweite Datenverbindung an die Datenauswertungseinheit zu übertragen.

Weiterer Gegenstand der Erfindung ist ein Verfahren für die Überwachung eines industriellen Prozesses mit einem Hauptsensor und zumindest einem von dem Hauptsensor separaten Zusatzsensor, wobei der Hauptsensor und der Zusatzsensor jeweils Messdaten erfassen. Der Hauptsensor wird mit dem Zusatzsensor über eine erste Datenverbindung gekoppelt und empfängt über die erste Datenverbindung die Messdaten des Zusatzsensors. Der Hauptsensor wird mit einer Datenauswertungseinheit über eine zweite Datenverbindung gekoppelt und überträgt seine eigenen Messdaten und die Messdaten des Zusatzsensors über die zweite Datenverbindung an die Datenauswertungseinheit.

Für den erfindungsgemäßen Hauptsensor und das erfindungsgemäße Verfahren gelten die Ausführungen zum erfindungsgemäßen Prozessüberwachungssystem entsprechend. Dies gilt insbesondere hinsichtlich Vorteilen und bevorzugten Ausführungsformen. Überdies versteht es sich, dass sämtliche hierin genannten Merkmale und Ausführungsformen miteinander kombiniert werden können, sofern nicht explizit etwas Gegenteiliges angegeben ist.

Nachfolgend wird die Erfindung rein beispielhaft unter Bezugnahme auf die Zeichnungen beschrieben. Es zeigen:
- Fig. 1: eine erste Ausführungsform eines Prozessüberwachungssystems; und
- Fig. 2: eine zweite Ausführungsform eines Prozessüberwachungssystems.

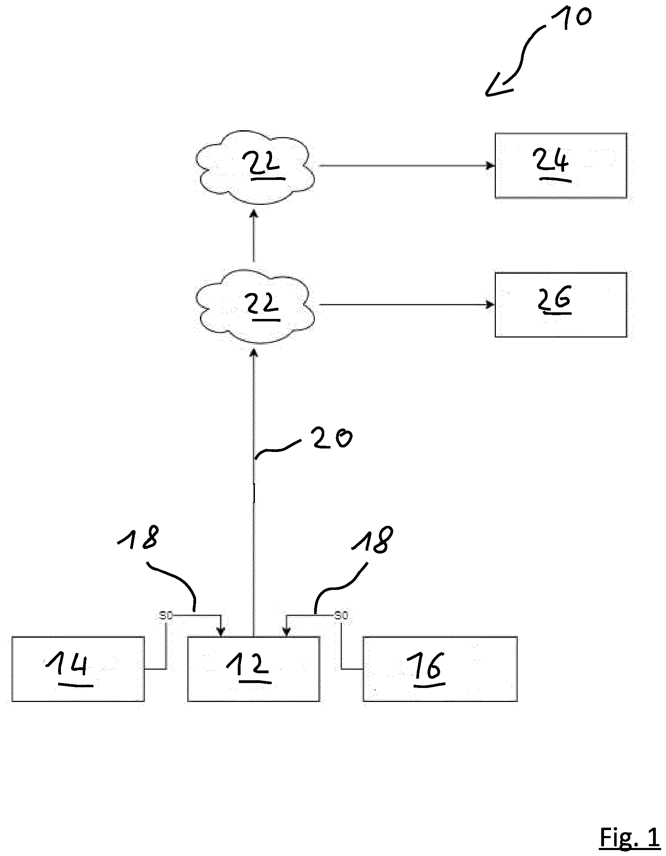

Fig. 1 zeigt ein Prozessüberwachungssystem 10 mit einem als Durchflusssensor für Druckluft ausgebildeten Hauptsensor 12. Der Hauptsensor 12 ist mit einem ersten Zusatzsensor 14 und einem zweiten Zusatzsensor 16 verbunden. Der erste Zusatzsensor 14 ist ein elektrischer Zähler, wohingegen der zweite Zusatzsensor 16 ein Wasserzähler ist.

Die Sensoren 12, 14, 16 überwachen einen (nicht gezeigten) industriellen Prozess, wobei beispielsweise der Hauptsensor 12 einen Durchgang für Druckluft aufweist, in welchem eine geheizte Sensorsonde angeordnet ist.

Die Zusatzsensoren 14, 16 sind über SO-Puls Schnittstellen 18 mit dem Hauptsensor 12 verbunden. Die SO-Puls Schnittstellen bilden somit die oben erwähnte erste Datenverbindung.

Der Hauptsensor 12 umfasst eine zweite Datenverbindung in Form einer Ethernet-Verbindung 20, welche den Hauptsensor 12 mit einem Ethernet-Netzwerk 22 verbindet. An das Ethernet-Netzwerk 22 ist eine Datenauswertungseinheit angeschlossen, welche eine Cloud-Datenauswertung 24 und/oder eine Edge-Datenauswertung 26 umfasst.

Im Betrieb des Prozessüberwachungssystems 10 übermitteln die Zusatzsensoren 14, 16 regelmäßig über die SO-Puls Schnittstelle 18 Messdaten an den Hauptsensor 12. Der Hauptsensor 12 setzt dann die Messdaten der Zusatzsensoren 14, 16 derart um, dass die Messdaten über die Ethernet-Verbindung 20 an die Cloud-Datenauswertung 24 und/oder die Edge-Datenauswertung 26 übermittelt werden können. Zusätzlich zu den Messdaten der Zusatzsensoren 14, 16 übermittelt der Hauptsensor 12 auch seine eigenen Messdaten an die Cloud-Datenauswertung 24 und/oder die Edge-Datenauswertung 26.

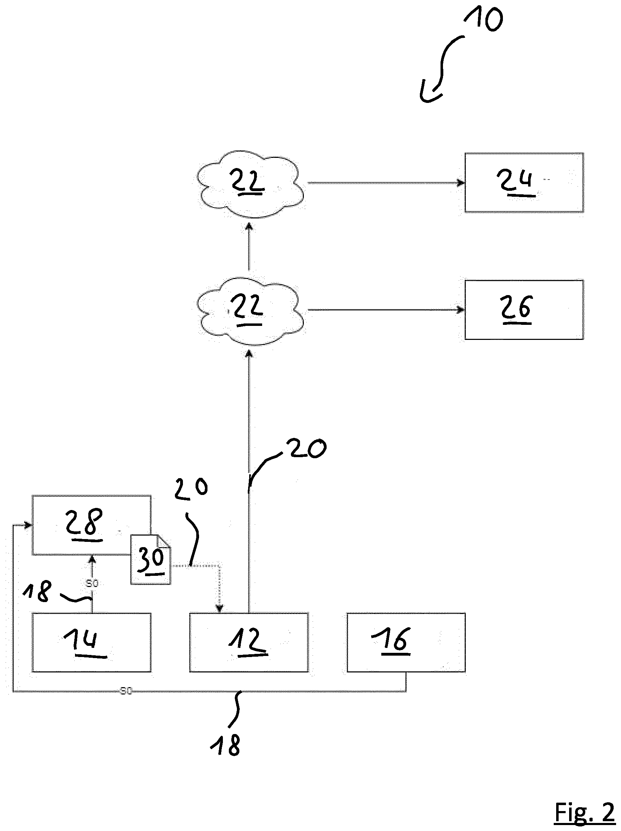

Fig. 2 zeigt eine alternative Ausführungsform des Prozessüberwachungssystems 10. Die Ausführungsform gemäß Fig. 2 unterscheidet sich von der Ausführungsform gemäß Fig. 1 darin, dass die Zusatzsensoren 14, 16 mittels der SO-Puls Schnittstellen 18 an ein Gateway 28 angeschlossen sind. Das Gateway 28 stellt die Messdaten der Zusatzsensoren 14, 16 über ein Interface 30 zum Abruf mittels der Ethernet-Verbindung 20 bereit. Der Hauptsensor 12 ruft die Messdaten der Zusatzsensoren 14, 16 dann über das Interface 30 von dem Gateway 28 ab und übermittelt die eigenen Messdaten und/oder die Messdaten der Zusatzsensoren 14, 16, wie oben beschrieben, an die Cloud-Datenauswertung 24 und/oder die Edge-Datenauswertung 26.

In beiden Ausführungsformen kann die Zwischenschaltung einer teuren und aufwendigen speicherprogrammierbaren Steuerung zur Erfassung der Messdaten der Zusatzsensoren 14, 16 vermieden werden. Zudem muss die Datenauswertung 24, 26 nur mit dem Hauptsensor kommunizieren, wodurch sich eine einfache und kostengünstige Möglichkeit der Prozessüberwachung mit einer Vielzahl von Sensoren ergibt.

### Bezugszeichenliste

- 10: Prozessüberwachungssystem
- 12: Hauptsensor
- 14: erster Zusatzsensor
- 16: zweiter Zusatzsensor
- 18: SO-Puls Schnittstelle
- 20: Ethernet-Verbindung
- 22: Ethernet-Netzwerk
- 24: Cloud-Datenauswertung
- 26: Edge-Datenauswertung
- 28: Gateway
- 30: Interface

## Patentansprüche

1. Prozessüberwachungssystem (10) für die Überwachung eines industriellen Prozesses mit einem Hauptsensor (12) und zumindest einem vom Hauptsensor (12) separaten Zusatzsensor (14, 16),
wobei das Prozessüberwachungssystem (10) weiterhin eine von den Sensoren separate Datenauswertungseinheit (24, 26) umfasst, wobei der Hauptsensor (12) und der Zusatzsensor (14, 16) jeweils ausgebildet sind, Messdaten zu erfassen,
wobei der Hauptsensor (12) mit dem Zusatzsensor (14, 16) über eine erste Datenverbindung (18) gekoppelt ist und ausgebildet ist, über die erste Datenverbindung (18) die Messdaten des Zusatzsensors (14, 16) zu empfangen,
wobei der Hauptsensor (12) mit der Datenauswertungseinheit (24, 26) über eine zweite Datenverbindung (20) gekoppelt ist und ausgebildet ist, seine eigenen Messdaten und die Messdaten des Zusatzsensors (14, 16) über die zweite Datenverbindung (20) an die Datenauswertungseinheit (24, 26) zu übertragen,
**dadurch gekennzeichnet, dass** die erste Datenverbindung (18) ausgebildet ist, Messdaten mittels Pulsabfolgen zu übertragen und die erste Datenverbindung (18) eine SO-Puls Schnittstelle (18) und eine Datenübertragung mittels M-Bus und/oder mittels Smart Message Language umfasst.

2. Prozessüberwachungssystem (10) nach Anspruch 1,
wobei die erste und die zweite Datenverbindung (20) an dem Hauptsensor (12) unterschiedliche Hardware-Schnittstellen umfasst.

3. Prozessüberwachungssystem (10) nach Anspruch 1 oder 2,
wobei die zweite Datenverbindung (20) eine Ethernet-Verbindung (20) ist.

4. Prozessüberwachungssystem (10) nach zumindest einem der vorstehenden Ansprüche,
wobei der Hauptsensor (12) eine Recheneinrichtung aufweist, welche ausgebildet ist, einen Webserver auszuführen, wobei die Recheneinrichtung zusätzlich ausgebildet ist, die Messdaten des Hauptsensors (12) und des Zusatzsensors (14, 16) an die Datenauswertungseinheit (24, 26) zu übermitteln.

5. Prozessüberwachungssystem (10) nach zumindest einem der vorstehenden Ansprüche,
wobei der Hauptsensor (12), der Zusatzsensor (14, 16) und die Datenauswertungseinheit (24, 26) räumlich voneinander getrennt angeordnet sind und insbesondere jeweils in separaten Gehäusen integriert sind.

6. Prozessüberwachungssystem (10) nach zumindest einem der vorstehenden Ansprüche,
wobei der Hauptsensor (12) und der Zusatzsensor (14, 16) ausgebildet sind voneinander unterschiedliche physikalische Größen als Messdaten zu erfassen.

7. Prozessüberwachungssystem (10) nach zumindest einem der vorstehenden Ansprüche,
wobei der Hauptsensor (12) ein Durchflusssensor, bevorzugt ein thermischer Durchflussmesser, insbesondere für Druckluft, ist.

8. Prozessüberwachungssystem (10) nach zumindest einem der vorstehenden Ansprüche,
wobei der Zusatzsensor (14, 16) ein Stromzähler oder ein Wasserzähler ist.

9. Prozessüberwachungssystem (10) nach zumindest einem der vorstehenden Ansprüche,
wobei die Datenauswertungseinheit (24, 26) durch einen Edge-Computer oder einen Cloud-Computer gebildet ist.

10. Hauptsensor (12) für ein Prozessüberwachungssystem (10) für die Überwachung eines industriellen Prozesses,
wobei der Hauptsensor (12) ausgebildet ist, Messdaten zu erfassen, wobei der Hauptsensor (12) mit einem Zusatzsensor (14, 16) über eine erste Datenverbindung (18) koppelbar ist und ausgebildet ist, über die erste Datenverbindung (18) Messdaten des Zusatzsensors (14, 16) zu empfangen,
wobei der Hauptsensor (12) mit einer Datenauswertungseinheit (24, 26) über eine zweite Datenverbindung (20) koppelbar ist und ausgebildet ist, seine eigenen Messdaten und die Messdaten des Zusatzsensors (14, 16) über die zweite Datenverbindung (20) an die Datenauswertungseinheit (24, 26) zu übertragen,
**dadurch gekennzeichnet, dass**
die erste Datenverbindung (18) ausgebildet ist, Messdaten mittels Pulsabfolgen zu übertragen und die erste Datenverbindung (18) eine SO-Puls Schnittstelle (18) und eine Datenübertragung mittels M-Bus und/oder mittels Smart Message Language umfasst.

11. Verfahren für die Überwachung eines industriellen Prozesses mit einem Hauptsensor (12) und zumindest einem vom Hauptsensor (12) separaten Zusatzsensor (14, 16),
wobei der Hauptsensor (12) und der Zusatzsensor (14, 16) jeweils Messdaten erfassen,
wobei der Hauptsensor (12) mit dem Zusatzsensor (14, 16) über eine erste Datenverbindung (18) gekoppelt wird und über die erste Datenverbindung (18) die Messdaten des Zusatzsensors (14, 16) empfängt,
wobei der Hauptsensor (12) mit der Datenauswertungseinheit (24, 26) über eine zweite Datenverbindung (20) gekoppelt wird und seine eigenen Messdaten und die Messdaten des Zusatzsensors (14, 16) über die zweite Datenverbindung (20) an die Datenauswertungseinheit (24, 26) überträgt, **dadurch gekennzeichnet, dass**
die erste Datenverbindung (18) ausgebildet ist, Messdaten mittels Pulsabfolgen zu übertragen und die erste Datenverbindung (18) eine SO-Puls Schnittstelle (18) und eine Datenübertragung mittels M-Bus und/oder mittels Smart Message Language umfasst.

## Claims

1. A process monitoring system (10) for monitoring an industrial process, said process monitoring system (10) comprising a main sensor (12) and at least one additional sensor (14, 16) separate from the main sensor (12), wherein the process monitoring system (10) furthermore comprises a data evaluation unit (24, 26) separate from the sensors,
wherein the main sensor (12) and the additional sensor (14, 16) are each configured to acquire measurement data,
wherein the main sensor (12) is coupled to the additional sensor (14, 16) via a first data link (18) and is configured to receive the measurement data of the additional sensor (14, 16) via the first data link (18),
wherein the main sensor (12) is coupled to the data evaluation unit (24, 26) via a second data link (20) and is configured to transmit its own measurement data and the measurement data of the additional sensor (14, 16) to the data evaluation unit (24, 26) via the second data link (20),
**characterized in that** the first data link (18) is configured to transmit measurement data by means of pulse sequences and the first data link (18) comprises an S0 pulse interface (18) and a data transmission by means of M-Bus and/or by means of Smart Message Language.

2. A process monitoring system (10) according to claim 1,
wherein the first and the second data link (20) comprise different hardware interfaces at the main sensor (12).

3. A process monitoring system (10) according to claim 1 or 2,
wherein the second data link (20) is an Ethernet connection (20).

4. A process monitoring system (10) according to at least one of the preceding claims,
wherein the main sensor (12) has a computing device which is configured to execute a web server, wherein the computing device is additionally configured to transmit the measurement data of the main sensor (12) and the additional sensor (14, 16) to the data evaluation unit (24, 26).

5. A process monitoring system (10) according to at least one of the preceding claims,
wherein the main sensor (12), the additional sensor (14, 16), and the data evaluation unit (24, 26) are arranged spatially separately from one another and are in particular each integrated in separate housings.

6. A process monitoring system (10) according to at least one of the preceding claims,
wherein the main sensor (12) and the additional sensor (14, 16) are configured to acquire mutually different physical variables as measurement data.

7. A process monitoring system (10) according to at least one of the preceding claims,
wherein the main sensor (12) is a flow sensor, preferably a thermal flow meter, in particular for compressed air.

8. A process monitoring system (10) according to at least one of the preceding claims,
wherein the additional sensor (14, 16) is an electricity meter or a water meter.

9. A process monitoring system (10) according to at least one of the preceding claims,
wherein the data evaluation unit (24, 26) is formed by an edge computer or a cloud computer.

10. A main sensor (12) for a process monitoring system (10) for monitoring an industrial process,
wherein the main sensor (12) is configured to acquire measurement data, wherein the main sensor (12) can be coupled to an additional sensor (14, 16) via a first data link (18) and is configured to receive measurement data of the additional sensor (14, 16) via the first data link (18),
wherein the main sensor (12) can be coupled to a data evaluation unit (24, 26) via a second data link (20) and is configured to transmit its own measurement data and the measurement data of the additional sensor (14, 16) to the data evaluation unit (24, 26) via the second data link (20), **characterized in that**
the first data link (18) is configured to transmit measurement data by means of pulse sequences and the first data link (18) comprises an S0 pulse interface (18) and a data transmission by means of M-Bus and/or by means of Smart Message Language.

11. A method for monitoring an industrial process using a main sensor (12) and at least one additional sensor (14, 16) separate from the main sensor (12), wherein the main sensor (12) and the additional sensor (14, 16) each acquire measurement data,
wherein the main sensor (12) is coupled to the additional sensor (14, 16) via a first data link (18) and receives the measurement data of the additional sensor (14, 16) via the first data link (18),
wherein the main sensor (12) is coupled to the data evaluation unit (24, 26) via a second data link (20) and transmits its own measurement data and the measurement data of the additional sensor (14, 16) to the data evaluation unit (24, 26) via the second data link (20),
**characterized in that**
the first data link (18) is configured to transmit measurement data by means of pulse sequences and the first data link (18) comprises an S0 pulse interface (18) and a data transmission by means of M-Bus and/or by means of Smart Message Language.

## Revendications

1. Système de surveillance de processus (10) pour surveiller un processus industriel, comprenant un capteur principal (12) et au moins un capteur supplémentaire (14, 16) séparé du capteur principal (12),
dans lequel
le système de surveillance de processus (10) comprend en outre une unité d'évaluation de données (24, 26) séparée des capteurs,
le capteur principal (12) et le capteur supplémentaire (14, 16) sont chacun conçus pour saisir des données de mesure,
le capteur principal (12) est couplé au capteur supplémentaire (14, 16) par l'intermédiaire d'une première liaison de données (18) et est conçu pour recevoir les données de mesure du capteur supplémentaire (14, 16) par l'intermédiaire de la première liaison de données (18),
le capteur principal (12) est couplé à l'unité d'évaluation de données (24, 26) par l'intermédiaire d'une deuxième liaison de données (20) et est conçu pour transmettre ses propres données de mesure et les données de mesure du capteur supplémentaire (14, 16) à l'unité d'évaluation de données (24, 26) par l'intermédiaire de la deuxième liaison de données (20), **caractérisé en ce que**
la première liaison de données (18) est conçue pour transmettre des données de mesure au moyen de séquences d'impulsions, et la première liaison de données (18) comprend une interface d'impulsions S0 (18) et une transmission de données au moyen d'un protocole M-Bus et/ou au moyen d'un protocole Smart Message Language.

2. Système de surveillance de processus (10) selon la revendication 1,
dans lequel les première et deuxième liaisons de données (20) comprennent des interfaces matérielles différentes sur le capteur principal (12).

3. Système de surveillance de processus (10) selon la revendication 1 ou 2, dans lequel la deuxième liaison de données (20) est une liaison Ethernet (20).

4. Système de surveillance de processus (10) selon l'une au moins des revendications précédentes,
dans lequel le capteur principal (12) comporte un dispositif de calcul conçu pour exécuter un serveur web, le dispositif de calcul étant en outre conçu pour transmettre les données de mesure du capteur principal (12) et du capteur supplémentaire (14, 16) à l'unité d'évaluation de données (24, 26).

5. Système de surveillance de processus (10) selon l'une au moins des revendications précédentes,
dans lequel le capteur principal (12), le capteur supplémentaire (14, 16) et l'unité d'évaluation de données (24, 26) sont disposés séparément les uns des autres dans l'espace et sont en particulier intégrés respectivement dans des boîtiers séparés.

6. Système de surveillance de processus (10) selon l'une au moins des revendications précédentes,
dans lequel le capteur principal (12) et le capteur supplémentaire (14, 16) sont conçus pour saisir des grandeurs physiques différentes les unes des autres en tant que données de mesure.

7. Système de surveillance de processus (10) selon l'une au moins des revendications précédentes,
dans lequel le capteur principal (12) est un capteur de débit, de préférence un débitmètre thermique, en particulier pour l'air comprimé.

8. Système de surveillance de processus (10) selon l'une au moins des revendications précédentes,
dans lequel le capteur supplémentaire (14, 16) est un compteur d'électricité ou un compteur d'eau.

9. Système de surveillance de processus (10) selon l'une au moins des revendications précédentes,
dans lequel l'unité d'évaluation de données (24, 26) est formée par un ordinateur de périphérie (Edge) ou par un ordinateur en nuage.

10. Capteur principal (12) pour un système de surveillance de processus (10) pour surveiller un processus industriel,
dans lequel
le capteur principal (12) est conçu pour saisir des données de mesure,
le capteur principal (12) peut être couplé à un capteur supplémentaire (14, 16) par l'intermédiaire d'une première liaison de données (18) et est conçu pour recevoir des données de mesure du capteur supplémentaire (14, 16) par l'intermédiaire de la première liaison de données (18),
le capteur principal (12) peut être couplé à une unité d'évaluation de données (24, 26) par l'intermédiaire d'une deuxième liaison de données (20) et est conçu pour transmettre ses propres données de mesure et les données de mesure du capteur supplémentaire (14, 16) à l'unité d'évaluation de données (24, 26) par l'intermédiaire de la deuxième liaison de données (20), **caractérisé en ce que**
la première liaison de données (18) est conçue pour transmettre des données de mesure au moyen de séquences d'impulsions, et la première liaison de données (18) comprend une interface d'impulsions S0 (18) et une transmission de données au moyen d'un protocole M-Bus et/ou au moyen d'un protocole Smart Message Language.

11. Procédé de surveillance d'un processus industriel avec un capteur principal (12) et au moins un capteur supplémentaire (14, 16) séparé du capteur principal (12),
dans lequel
le capteur principal (12) et le capteur supplémentaire (14, 16) saisissent chacun des données de mesure,
le capteur principal (12) est couplé au capteur supplémentaire (14, 16) par l'intermédiaire d'une première liaison de données (18) et reçoit les données de mesure du capteur supplémentaire (14, 16) par l'intermédiaire de la première liaison de données (18),
le capteur principal (12) est couplé à l'unité d'évaluation de données (24, 26) par l'intermédiaire d'une deuxième liaison de données (20) et transmet ses propres données de mesure et les données de mesure du capteur supplémentaire (14, 16) à l'unité d'évaluation de données (24, 26) par l'intermédiaire de la deuxième liaison de données (20),
**caractérisé en ce que**
la première liaison de données (18) est conçue pour transmettre des données de mesure au moyen de séquences d'impulsions, et la première liaison de données (18) comprend une interface d'impulsions S0 (18) et une transmission de données au moyen d'un protocole M-Bus et/ou au moyen d'un protocole Smart Message Language.
